# EUROPEAN PATENT APPLICATION

(11) **EP 2 402 854 A1**
(43) Date of publication of application: **04.01.2012**
(21) Application number: 09849503.9
(22) Date of filing: 17.09.2009
(51) Int. Cl.: G06F 9/44

(54) **APPLICATION DEVELOPMENT ASSISTING DEVICE, PROGRAM, AND RECORDING MEDIUM**

(71) Applicant: The Bank of Tokyo-Mitsubishi UFJ, Ltd., Chiyoda-ku Tokyo 100-8388 (JP)
(72) Inventor: CHINUKI, Motonari, Tokyo 103-0027 (JP); SAITO, Kenya, Tokyo 103-0027 (JP)
(74) Representative: Klunker . Schmitt-Nilson . Hirsch
(86) International application number: PCT/JP2009/066304
(87) International publication number: WO 2011/033644

(57) **Abstract**

A workload is reduced during switching of predetermined programs in a development of an application program which transmits a variable input through a user interface (UI) screen to a predetermined program and cause the predetermined program to perform a processing.

During a period for which a UI realized by a screen control program is presented and requirements are determined in a development period of application, a managed bean provided with only a collective storage area (map1 and map2) in which variables are stored in a KEY-VALUE format as a variable storage area is used to and prototype script (not shown) for performing a pseudo-processing and the screen control program work with to realize the presentation of the UI. When the variables transmitted between the programs are established, a web service providing program is developed and the web service providing program replaces the prototype script, and the managed bean is replaced by a new managed bean to which an individual storage area 56 provided for each variable transmitted to and from the web service providing program and a program (variable copy section) which copies the variable between the collective storage area and the individual storage area 56 are added.

## Description

### Technical Field

The present invention relates to an application development supporting apparatus, a program, and a recording medium, and more particularly, to an application development supporting apparatus supporting the development of an application program that transmits variables which are input through a user interface screen to a predetermined program and causes a computer to perform a processing, an application development supporting program that causes the computer to function as the application development supporting apparatus, and a recording medium having the application development supporting program recorded thereon.

### Background Art

In recent years, BPEL (Business Process Execution Language) has been spreading as a standard (language) capable of describing a business process as a workflow. For BPEL, a tool is prepared which selects desired parts from plural kinds of parts corresponding to different processes and combines the parts to visually describe a desired workflow, and which can automatically generate a program based on BPEL from the created workflow, and an execution environment for causing the computer to execute the program automatically generated by the tool can be constructed. Therefore, the use of the tool makes it possible to develop a program for causing the computer to create a workflow which provides a desired web service easily and in a short time. In the BPEL standard, it is necessary to set variable definition information (WSDL (Web Service Description Language)) which defines the type of input and output variables in the processing realized by BPEL in advance, and the variable definition information is referred to when a program based on BPEL is generated.

JSF (Java (Registered Trademark) Server Faces) has been known as a standard for constructing a web application-oriented user interface. For JSF, a tool is prepared which selects desired symbols from plural kinds of symbols that can be used as components of the user interface screen and arranges the selected symbols, thereby constructing a user interface, such as a design of a user interface screen or a definition of a transition of the user interface screen, and which can automatically generate a program which realizes the constructed user interface, and the use of the tool makes it possible to obtain a program which realizes a desired user interface easily and in a short time without performing a coding job.

Therefore, the applicant has proposed a technique which realizes cooperation between JSF and BPEL in a case in which a program which realizes a user interface is automatically generated using JSF and in a case in which a program which realizes a web service is automatically generated using BPEL, without performing a coding job, in order to significantly reduce the development time of the web application (see Japanese Patent Application Laid-Open (JP-A) No. 2009-087093).

Japanese Patent Application Laid-Open (JP-A) No. 2005-228184 related to the above discloses a technique in which, when request information is acquired from a terminal, an execution engine of an application executing apparatus extracts a screen variable value and an event from the acquired request information, determines a state transition corresponding to the extracted event on the basis of state transition definition, associates a screen variable whose value is acquired from the request information with an application variable on the basis of a screen variable-application variable correspondence definition, executes a logic corresponding to the extracted event, associates the application variable whose value is determined by the execution of the logic with an output screen variable on the basis of the screen variable-application variable correspondence definition, and generates an output screen on the basis of a screen definition.

Japanese Patent Application Laid-Open (JP-A) No. 2009-9362 discloses that, in a program variable management system that manages delivery of values of variables defined in each of plural programs described by different languages or values of variables commonly defined between plural programs, accompanied with a page transition, the program variable management system records transition source information and transition destination information of a variable in a link management table for each processing accompanied with the page transition of the program, registers the definition information of the variable in a variable management table, and performs at least one of a processing of delivering the value of the variable and a processing of substituting the value of the variable between pages before and after the page transition.

### DISCLOSURE OF THE INVENTION

### Technical Problem

However, in recent years, as a new software development method, an adaptive development method (referred to as agile software development) has been proposed which initiates development of software without strictly defining the requirements of software to be developed and advances the development while rapidly adapting to a change in the requirements when the requirements are changed. In the development of a web application using the development method, for example, requirements are determined while repeatedly performing a process of discussing a web application with a client while showing a current user interface etc. of the web application which is being developed to the client, changing the user interface etc. in accordance with the client's demand, and showing the changed new user interface to the client again.

In the JSF standard, each of the information input/display fields arranged in the user interface screen can be associated (bound) with any one of the storage areas which are provided in variable storage areas for plural variables (the variable storage areas are incorporated into a program which is called a managed bean), and, when the program is executed, a synchronization processing is performed between the information input/display field, and the storage area which are bound with each other (specifically, information input in the information input field is stored in the storage area bound with the information input field and the information stored in the storage area is displayed in the information display field bound with the storage area), and utilizing the above, the technique disclosed in JP-A-2009-087093 uses a JSF tool to automatically generate a program for realizing a user interface, uses, for example, a BPEL tool to automatically generate a program for realizing a web service, generates (a managed bean including) a variable storage area in which storage areas corresponding to input variables and output variables are provided from the variable definition information of BPEL, and performs the transmission of the variables between the program for realizing the user interface and the program for realizing the web service through (the managed bean including) the variable storage, whereby associating the program for realizing the user interface with the program for realizing the web service is realized.

Therefore, as in the technique disclosed in JP-A-2009-087093, when an agile software development is used to develop the web application in which a portion for supplying a web service is achieved by BPEL, if a variable transmitted between a program for realizing a user interface and a program for realizing a web service is changed due to, for example, a change in the user interface, it is necessary to change the variable definition information of BPEL and then generate (a managed bean including) a new variable storage area from the changed variable definition information, and therefore, it takes a long time to show the changed new user interface to the client again, whereby there is a problem in that a workload of a developer increases or a development time increases.

In order to solve the above-mentioned problems, it is considered that a program which is described by a script language, such as JRuby, and may be cooperated with a Ruby or Java (registered trademark) program is used as a program for realizing a web service. In JRuby or Ruby, a type of variable is determined when a program is executed, and therefore, even though a variable transmitted between a program for realizing a user interface and a program for realizing a web service is changed, it is not necessary to change (a managed bean including) a variable storage area, and thus, JRuby or Ruby is suitable for the agile software development. However, JRuby or Ruby is a script language, and a stability of an operation during an execution of a program in JRuby or Ruby is lower than that in BPEL, and therefore, there is a need for using a program based on BPEL as a program for realizing a web service.

In order to meet such a need, when a user interface is shown to a client during a development of a web application, it is not necessary for a program for realizing a web service to perform processing to actually provide a web service, but it is necessary for the program for realizing the web service to perform processing such as transmission of variables to, for example, cause a user interface screen to transit, and on the basis of the above, it has been considered that, until requirements of software to be developed are established and variables transmitted between the program for realizing the user interface and the program for realizing the web service are established, a program described by a script language such as JRuby is used as the program for realizing the web service, and after the requirements are established and input/output variables are also established, a program based on BPEL is developed as the program for realizing the web service on the basis of the established input/output variables, and the program for realizing the web service is switched.

However, in the above-mentioned aspect, there arises a new problem in that, when the program for realizing the web service is switched from the program described by the script language to the program based on BPEL, (the managed bean including) the variable storage area also needs to be switched from (a managed bean including) a variable storage area for the script language to (a managed bean including) a variable storage area for BPEL, and when (the managed bean including) the variable storage area is switched, it is necessary to change the program for realizing the user interface (for example, change the binding destination of each of the information input/display fields arranged in the user interface screen). In particular, the above-mentioned operation is very complicated in a web application that provides a user interface including plural user interface screens, whereby a workload of a developer increases or a development time increases.

JP-A-2005-228184 and JP-A-2009-9362 disclose transmission of variables between plural programs, but do not disclose a technique for reducing a workload when one of a pair of programs which transmits variables therebetween is switched to the other program.

The invention has been made in consideration of the above-mentioned circumstances, and an object of the invention is to provide an application development supporting apparatus capable of reducing a workload when a predetermined program is switched in the development of an application program that transmits variables input through a user interface screen to a predetermined program to cause a computer to perform a predetermined processing, an application development supporting program, and a recording medium. Solution to Problem

In order to achieve the object, according to a first aspect of the invention, an application development supporting apparatus is configured to include: a first control unit that transmits a first input variable whose value is stored in a first storage area to a first program, in which a type of a variable transmitted between an exterior and the first program is determined in a first processing realized by execution of the first program by a computer, and causes the computer to perform the first processing, during a first period for which only the first storage area, in which at least the value of the first input variable input in an information input field of a user interface screen is stored so as to be associated with a name of the first input variable, is provided as a variable storage area when a program is executed; a generating unit that generates a second storage area provided with a storage area for at least each second input variable which is transmitted from the exterior to a second program among variables defined in variable definition information on the basis of the variable definition information which is set with respect to the second program in which a type of a variable transmitted between the exterior and the second program needs to be defined in advance by the variable definition information and by which a second processing is performed by execution by a computer; and a second control unit that, during a second period after the second storage area is generated by the generating unit, copies the value of the first input variable stored in the first storage area to the storage area of the second input variable corresponding to the first input variable within the second storage area, transmits the second input variable whose value is copied to the storage area to the second program, and causes a computer to perform the second processing according to the transmitted second input variable.

In the first aspect of the invention, during the first period, only the first storage area is provided as the variable storage area, at least the value of the first input variable input in the information input field of the user interface screen is stored in the first storage area so as to be associated with the name of the first input variable when the program is executed. The first control unit according to the first aspect of the invention transmits the first input variable whose value is stored in the first storage area to the first program in which the type of a variable transmitted between the exterior and the first program is determined in the first processing realized by the execution of the first program by the computer during the first period, and causes the computer to perform the first processing.

As such, during the first period, when the program is executed, the value of the first input variable input in the information input field of the user interface screen is temporarily stored in the first storage area so as to be associated with the name of the first input variable and is then transmitted to the first program, and the first processing is performed. The first program is configured such that the type of the variable transmitted between the exterior and the first program is determined in the first processing realized by the execution of the first program by the computer, and therefore, for example, even though a number or a type of the first input variable is changed due to change in the user interface screen, the processing of transmitting the first input variable input in the information input field of the user interface screen to the first program through the first storage area may be continued, without changing a structure of the first storage area and/or the processing performed by the first control unit.

Therefore, since, for example, even though the user interface screen is changed, the user interface screen may return to an operable state in a short time, when an application program for transmitting the variable input through the user interface screen to a predetermined program and causing the computer to perform a processing is developed by an adaptive development method such as agile software development, the first period according to the first aspect of the invention is suitable for a period for which requirements are determined while repeating of changing of the user interface and etc.. Note that, for example, a program described by a script language is preferable as the first program as in a seventh aspect of the invention, and, as one example, a JRuby program is preferable as the first program.

The generating unit according to the first aspect of the invention generates a second storage area provided with a storage area provided for at least each second input variable which is transmitted from the exterior to the second program among the variables defined in the variable definition information, on the basis of the variable definition information which is set to the second program in which the type of the variable transmitted between the exterior and the second program needs to be defined in advance on the basis of the variable definition information and by which the second processing is executed by the execution of the computer. The second control unit according to the first aspect of the invention, during the second period after the second storage area is generated by the generating unit, copies the value of the first input variable stored in the first storage area to the storage area of the second input variable corresponding to the first input variable in the second storage area, transmits the second input variable whose value is copied to the storage area to the second program and causes the computer to perform the second processing according to the transmitted second input variable.

In this way, during the second period, in addition to the first storage area, the second storage area generated by the generating unit is added as the variable storage area, and, when the program is executed, the value of the first input variable input in the information input field of the user interface screen is temporarily stored in the first storage area so as to be associated with the name of the first input variable, and then, the value of the first input variable is copied to the storage area of the second input variable corresponding to the first input variable, which is stored in the first storage area, within the second storage area by the second control unit and is then transmitted as the second input variable to the second program, and, the second processing according to the transmitted second input variable is performed. Note that, for example, a program based on BPEL is preferable as the second program. Further, the second input variable corresponding to the first input variable may be determined by that, for example, the same name is set to the name of the first and second input variables, but the invention is not limited thereto, for example, it may be determined with reference to, for example, a table in which correspondence relationships between the first input variable and the second input variable is registered in advance, and in this case, the first and second input variables may have different names.

As such, in the first aspect of the invention, when the variable input through the user interface screen is transmitted and the program which causes a computer to perform a processing is switched from the first program to the second program (in a case of transiting from the first period to the second period), although it is necessary to generate the second storage area by the generating unit, since an area which initially stores the value of the first input variable input in the information input field of the user interface screen is the same during the first period and the second period (the first storage area), even when the programs is switched, it is not necessary to change, for example, setting of an storage area of variables on the user interface screen. Therefore, according to the first aspect of the invention, in the development of an application program which transmits the variables input through the user interface screen to a predetermined program and causes a computer to perform a processing, a workload may be reduced when a predetermined program is switched (changed, replaced).

Note that, in the first aspect of the invention, since, after transition from the first period to the second period, it is necessary to set the variable definition information again and/or generate the second storage area again each time the number or the type of the variable transmitted between the exterior and the second program is changed, when an application program which transmits the variables input through the user interface screen to a predetermined program and causes a computer to perform a processing is developed by an adaptive development method such as agile software development, transition from the first period to the second period may be performed after requirements are established and the user interface and/or variables to be transmitted are also established.

According to a second aspect of the invention, in the application development supporting apparatus of the first aspect, the first control unit, during the first period, transmits the first input variable whose value is stored in the first storage area to the first program and causes the computer to perform the first processing, and stores a value of a first output variable transmitted from the first program in the first storage area so as to be associated with a name of the first output variable after the first processing is completed, the value of the first output variable stored in the first storage area is displayed in an information display field of the user interface screen, the generating unit generates the second storage area provided with the storage area for each second input variable transmitted from the exterior to the second program and each second output variable transmitted from the second program to the exterior, on the basis of the variable definition information, and the second control unit, during the second period, copies the value of the first input variable stored in the first storage area to the storage area of the second input variable corresponding to the first input variable within the second storage area, transmits the second input variable whose value is copied to the storage area to the second program, and cause the computer to perform the second processing according to the transmitted second input variable, and after the second processing is completed, the second control unit stores the value of the second output variable transmitted from the second program in the storage area corresponding to the transmitted second output variable in the second storage area, and stores the value of the second output variable as the value of the first output variable in the first storage area so as to be associated with the name of the first output variable corresponding to the second output variable.

In the second aspect of the invention, during the first period, the first control unit performs a processing of transmitting the first input variable whose value is stored in the first storage area to the first program, causing the computer to perform the first processing, and, after the first processing is completed, storing the value of the first output variable transmitted from the first program in the first storage area so as to be associated with the name of the first output variable, and the value of the first output variable stored in the first storage area is displayed in the information display field of the user interface screen. As described above, since the first program is configured such that the type of the variable transmitted between the exterior and the first program is determined in the first processing realized by the execution of the first program by the computer, during the first period, for example, even if the number or the type of the first output variable is changed due to a change in the user interface screen, a status of performing the processing of displaying the first input variable transmitted from the first program in the information display field of the user interface screen through the first storage area may be continued without changing the structure of the first storage area and/or the processing performed by the first control unit.

In the second aspect of the invention, the generating unit generates the second storage area provided with the storage areas provided for each second input variable transmitted from the exterior to the second program and each second output variable transmitted from the second program to the exterior, on the basis of the variable definition information, and, during the second period, the second control unit copies the value of the first input variable stored in the first storage area to the storage area of the second input variable corresponding to the first input variable within the second storage area, transmits the second input variable whose value is copied to the storage area to the second program, and causes the computer to perform the second processing according to the transmitted second input variable, after the second processing is completed, the second control unit stores the value of the second output variable transmitted from the second program in the storage area corresponding to the received second output variable in the second storage area and stores the value of the second output variable as the value of the first output variable in the first storage area so as to be associated with the name of the first output variable corresponding to the second output variable.

As such, in the second aspect of the invention, since an area in which the value of the first input variable input in the information input field of the user interface screen is initially stored and an area in which the value of the second output variable transmitted from the second program is finally stored as the value of the first output variable are the same in the first period and the second period (first storage area), when the variable input through the user interface screen is transmitted and the program for causing the computer to perform a processing is changed from the first program to the second program (transition from the first period to the second period), it is not necessary to change, for example, settings of a storage area of variable in the user interface screen or a read destination of a variable to be displayed. Therefore, according to the second aspect of the invention, in the development of an application program which transmits the variables input through the user interface screen to a predetermined program and causes a computer to perform a processing and displays the variables transmitted from a predetermined program in the user interface screen, a workload may be reduced when a predetermined program is changed.

In a third aspect of the invention, in the application development supporting apparatus according to the first or second aspect, a name is assigned to a first file which includes the first storage area in advance, during designing of the user interface screen, the name of the first input variable which is input in the information input field of the user interface screen and the name of the first file may be set in the information input field, during execution of the program, at least a processing of storing the value of the first input variable input in the information input field of the user interface screen in the first storage area so as to be associated with the name of the first input variable may be performed by a computer, which executes a third program for realizing a user interface which includes the user interface screen, on the basis of the name of the first input variable and the name of the first file which are set in the information input field, after generating the second storage area, the generating unit may assign the same name as that of the first file to a second file which includes the first storage area and the generated second storage area, and the second file to which the same name as the first file is assigned may replace the first file.

In the third aspect of the invention, a name is assigned in advance to the first file (for example, a file in which the first storage area is incorporated into the program serving as the first control unit) which includes the first storage area. During designing of the user interface screen, the name of the first input variable input in the information input field and the name of the first file are set in the information input field, and therefore, the computer which executes the third program for realizing the user interface which includes the user interface screen performs a processing of storing at least the value of the first input variable input in the information input field of the user interface screen in the first storage area so as to be associated with the name of the first input variable when the program is executed, on the basis of the name of the first input variable and the name of the first file which are set in the information input field. After generating the second storage area, the generating unit according to the third aspect of the invention assigns the same name as that of the first file to the second file which includes the first storage area and the generated second storage area and replaces the second file with the first file.

In this way, in the processing realized by the execution of the third program by the computer, the first storage area included in the second file after replacement and the first storage area included in the first file before replacement are recognized to be the same on the basis of the same name of the first and the second files, and the storage area of the first input variable input in the information input field of the user interface screen is switched from the first storage area included in the first file before replacement to the first storage area included in the second file after replacement. Therefore, according to the third aspect of the invention, even if the processing realized by the third program for realizing the user interface recognizes the storage area of the first input variable on the basis of the name of the file including the storage area, it is not necessary to change the setting (third program) of the user interface screen when the program is switched from the first program to the second program (transition from the first period to the second period).

According to a fourth aspect of the invention, in the application development supporting apparatus according to the third aspect, during designing of the user interface screen, the name of the first output variable which is displayed in the information display field of the user interface screen and the name of the first file may be set in the information display field, and a processing of displaying the value of the first output variable stored in the first storage area in the information display field of the user interface screen may also be performed, by the computer executing the third program, on the basis of the name of the first output variable and the name of the first file which are set in the information display field.

In this case, the generating unit according to the third aspect assigns the same name as that of the first file to the second file and the second file replaces the first file, and therefore, in the processing realized by the execution of the third program by the computer, the read destination of the value of the first output variable displayed in the information display field of the user interface screen is switched from the first storage area included in the first file before replacement to the first storage area included in the second file after replacement. Therefore, according to the fourth aspect of the invention, even if the processing realized by the third program for realizing the user interface recognizes the read destination of the first output variable on the basis of the name of the file including the storage area, it is not necessary to change the setting (third program) of the user interface screen when switching from the first program to the second program (transition from the first period to the second period).

In a fifth aspect of the invention, in the application development supporting apparatus according to the third or fourth aspect, the third program may be generated using a first tool which cause a computer to generate the third program, for realizing the user interface, which displays plural kinds of symbols, which include information input/display fields capable of being used as components of the user interface screen and capable of at least one of inputting and displaying of information, at a display screen and which generates the user interface when a developer performs at least a first operation of disposing a desired symbol among the plural kinds of symbols at a desired position at a screen to design the user interface screen, thereby defining the user interface to be constructed. According to a sixth aspect of the invention, the first tool may be based on a JSF standard.

According to an eighth aspect of the invention, in the application development supporting apparatus according to any one of the first to seventh aspects, the first program may be executed at a computer that executes a platform program serving as a platform for executing the first program. In this case, a processing of determining the type of the variable transmitted between the exterior and the first program in the first processing realized by the execution of the first program by the computer may be performed by the execution of the platform program by the computer.

According to a ninth aspect of the invention, in the application development supporting apparatus according to any one of the first to eighth aspects, when a developer creates a flowchart defining a desired processing, the second program for performing the processing indicated by the created flowchart may be generated by a computer using a second tool. According to a tenth aspect of the invention, the second tool may be based on a BPEL standard.

According to an eleventh aspect of the invention, there is provided a application development supporting program that causes a computer to function as a first control unit that transmits a first input variable whose value is stored in a first storage area to a first program, in which a type of a variable transmitted between an exterior and the first program is determined in a first processing realized by execution of the first program by a computer, and causes the computer to perform the first processing, during a first period for which only the first storage area, in which at least the value of the first input variable input in an information input field of a user interface screen is stored so as to be associated with a name of the first input variable, is provided as a variable storage area when a program is executed; a generating unit that generates a second storage area provided with a storage area for at least each second input variable which is transmitted from an exterior to a second program among variables defined in variable definition information on the basis of the variable definition information which is set with respect to the second program in which a type of a variable transmitted between the exterior and the second program needs to be defined in advance by the variable definition information and by which a second processing is performed by execution by a computer; and a second control unit that, during a second period after the second storage area is generated by the generating unit, copies the value of the first input variable stored in the first storage area to the storage area of the second input variable corresponding to the first input variable within the second storage area, transmits the second input variable whose value is copied to the storage area to the second program, and causes a computer to perform the second processing according to the transmitted second input variable.

Since the application development supporting program according to the eleventh aspect of the invention causes a computer to function as the first control unit, the generating unit, and the second control unit, the computer functions as the application development supporting apparatus according to the first aspect of the invention by executing the program according to the eleventh aspect of the invention, and as similar to the first aspect of the invention, in the development of an application program which transmits the variables input through the user interface screen to a predetermined program and causes the computer to perform a processing, a workload may be reduced when a predetermined program is switched.

According to a twelfth aspect of the invention, there is provided a recording medium including an application development supporting program that causes a computer to function as a first control unit that transmits a first input variable whose value is stored in a first storage area to a first program, in which a type of a variable transmitted between an exterior and the first program is determined in a first processing realized by execution of the first program by a computer, and causes the computer to perform the first processing, during a first period for which only the first storage area, in which at least the value of the first input variable input in an information input field of a user interface screen is stored so as to be associated with a name of the first input variable, is provided as a variable storage area when a program is executed; a generating unit that generates a second storage area provided with a storage area for at least each second input variable which is transmitted from an exterior to a second program among variables defined in variable definition information on the basis of the variable definition information which is set with respect to the second program in which a type of a variable transmitted between the exterior and the second program needs to be defined in advance by the variable definition information and by which a second processing is performed by execution by a computer; and a second control unit that, during a second period after the second storage area is generated by the generating unit, copies the value of the first input variable stored in the first storage area to the storage area of the second input variable corresponding to the first input variable within the second storage area, transmits the second input variable whose value is copied to the storage area to the second program, and causes a computer to perform the second processing according to the transmitted second input variable.

Since the recording medium according to the twelfth aspect of the invention stores the application development supporting program according to the eleventh aspect, that is, the program which causes a computer to function as the first control unit, the generating unit, and the second control unit, the computer reads and executes the program stored at the recording medium according to the twelfth aspect and functions as the application development supporting apparatus according to the first aspect, as similar to the first and eleventh aspects of the invention, in the development of an application program which transmits the variables input through the user interface screen to a predetermined program and causes the computer performs a processing, a workload may be reduced when a predetermined program is changed.

### Advantageous Effects of Invention

As described above, since the invention transmits a first input variable whose value is stored in a first storage area to a first program, in which a type of a variable transmitted between an exterior and the first program is determined in a first processing realized by execution of the first program, and causes to perform the first processing, during a first period for which only the first storage area, in which the value of the first input variable input in an information input field of a user interface screen is stored so as to be associated with a name of the first input variable, is provided as a variable storage area when a program is executed, generates a second storage area provided with a storage area for at least each second input variable which is transmitted from the exterior to a second program among variables defined in variable definition information on the basis of the variable definition information which is set with respect to the second program in which a type of a variable transmitted between the exterior and the second program needs to be defined in advance by the variable definition information and which realizes the second processing, during a second period after the second storage area is generated by the generating unit, copies the value of the first input variable stored in the first storage area to the storage area of the second input variable corresponding to the first input variable within the second storage area, transmits the second input variable whose value is copied to the storage area to the second program, and causes to perform the second processing according to the transmitted second input variable, in a development of an application program which transmits the variables input through the user interface screen to a predetermined program and causes the computer performs a processing, a workload may be reduced when a predetermined program is switched.

### BRIEF DESCRIPTION OF DRAWINGS

Fig. 1 is a block diagram illustrating the schematic structure of a first computer system as a development environment of an application program according to this exemplary embodiment.
Fig. 2 is an image diagram illustrating an example of a UI construction tool creation screen.
Fig. 3 is a diagram schematically illustrating an example of a flow of a processing in a prototype phase (when showing a UI).
Fig. 4A is an image diagram illustrating an example of a creation screen of a web service creation tool.
Fig. 4B is an image diagram illustrating an example of a flow that is created in the creation screen by a web service creation tool.
Fig. 5 is a flowchart illustrating a content of a managed bean generating processing.
Fig. 6 is a diagram schematically illustrating an example of a flow of a processing when a prototype script is changed to a web service providing program.
Fig. 7 is a flowchart illustrating a content of a copy processing.
Fig. 8 is a block diagram illustrating a schematic structure of a second computer system as an operation environment of an application program.

### BEST MODE FOR CARRYING OUT THE INVENTION

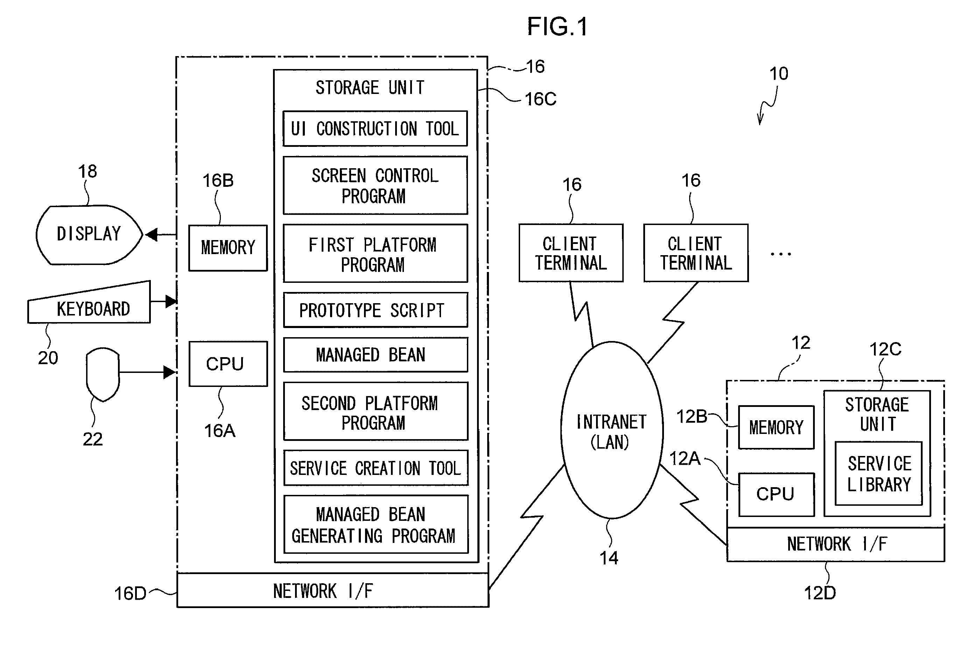

Hereinafter, an exemplary embodiment of the invention will be described in detail with reference to the accompanying drawings. Fig. 1 shows a first computer system 10 according to this exemplary embodiment. The first computer system 10 according to this exemplary embodiment is used to develop an application program for providing a predetermined service (web service) to a user who accesses a predetermined web site and is configured by connecting a server computer 12 to plural client terminals 16 through an intranet 14.

Each of the client terminals 16 is operated by a developer who develops an application program, and, for example, each client terminal 16 is a personal computer (PC) and includes a CPU 16A, a memory 16B such as a RAM, a non-volatile storage unit 16C such as an HDD (Hard Disk Drive) or a flash memory, and a network interface (I/F) unit 16D. A display 18 serving as a display unit and a keyboard 20 and a mouse 22 serving as an input unit are connected to each client terminal 16, and each client terminal 16 is connected to the intranet 14 through the network I/F unit 16D.

The application programs include a screen control program (a third program described in claim 3) for realizing a user interface (UI) in a predetermined web site, a web service providing program (an example of a second program according to the invention) for providing a predetermined web service to the user, and an interface program (in this exemplary embodiment, a managed bean based on a JSF (Java (Registered Trademark) Server Faces) standard is given as an example of the interface program) for transmitting variables between the two programs.

An UI construction tool program for generating and developing the screen control program and a web service creation tool program for generating and developing the web service providing program are installed in the storage unit 16C of each client terminal 16. Note that the UI construction tool corresponds to a first tool described in claim 5 and the web service creation tool corresponds to a second tool described in claim 9. A tool based on the JSF standard is preferable as the UI construction tool, however, a tool based on other standard may be used as the UI construction tool. In addition, a tool based on a BPEL (Business Processing Execution Language) standard is preferable as the web service creation tool, however, a tool based on other standard may be used as the web service creation tool.

In addition, the screen control program generated by the UI construction tool, a first platform program serving as a platform for executing the screen control program, a prototype script which is an example of the first program according to the invention, a managed bean generating program, a managed bean (program), and a second platform program serving as a platform for executing a program incorporated into the prototype script or the managed bean are installed in the storage unit 16C of each client terminal 16. The client terminal 16 corresponds to a computer described in claims 11 and 12, and the managed bean generating program corresponds to a program for causing the computer to function as a generating unit among the application development supporting programs described in claims 11 and 12.

The server computer 12 includes a CPU 12A, a memory 12B such as a RAM, a non-volatile storage unit 12C, and a network I/F unit 12D and is connected to the intranet 14 through the network I/F unit 12D. In the development of the web service providing program using the web service creation tool, the program is developed in the unit of a web service (for example, a "book search", which will be described below), an the developed web service providing program may also be used to provide the same web service in another web site. Therefore, the storage unit 12C of the server computer 12 stores a web service library for registering the developed web service providing program uploaded from the client terminal 16. The web service providing program registered in the web service library may be used by plural developers who operate different client terminals 16.

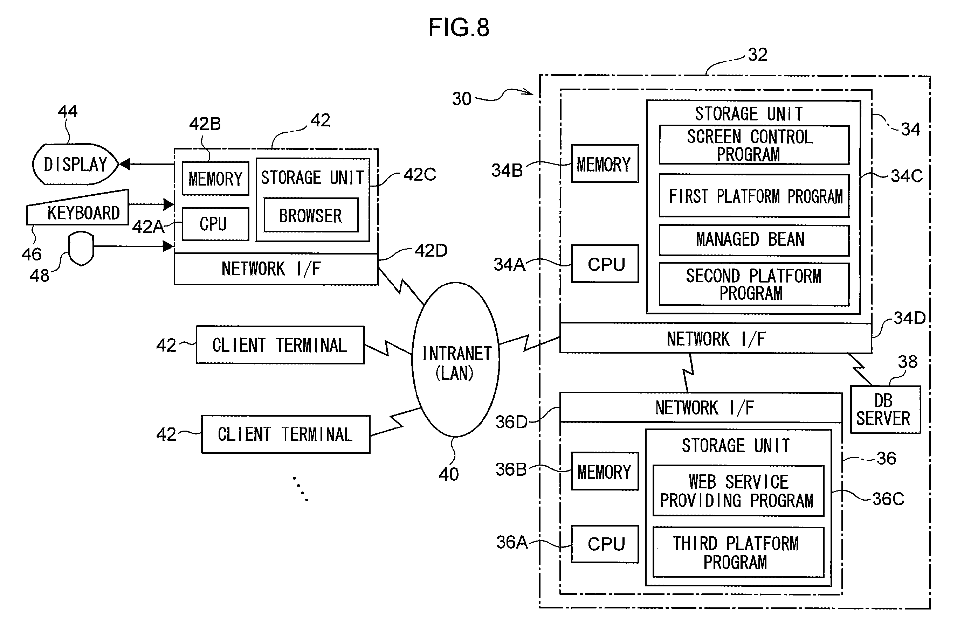

Next, the structure of a second computer system 30 as the execution environment of the application program developed by the first computer system 10 will be described with reference to Fig. 8. The second computer system 30 includes a web site operating system 32 for operating a specific web site. The web site operating system 32 includes an application server 34, a web service providing server 36, and a DB (database) server 38, and the web service providing server 36 and the DB server 38 are connected to the application server 34 through communication lines.

The application server 34 includes a CPU 34A, a memory 34B such as a RAM, a non-volatile storage unit 34C, and a network I/F unit 34D. Note that the programs stored in the storage unit 34C will be described later. The network I/F unit 34D of the application server 34 is connected to an intranet 40 (the network I/F unit 34D may be connected to the Internet, instead of the intranet 40), plural client terminals 42 are connected to the intranet 40, each of the client terminals 42 includes a CPU 42A, a memory 42B such as a RAM, a non-volatile storage unit 42C, and a network I/F unit 42D, program of a browser (web browsing software) is installed in the storage unit 42C, and a display 44 serving as a display unit, and a keyboard 46 and a mouse 48 serving as an input unit are connected to each client terminal 42. The web service providing server 36 includes a CPU 36A, a memory 36B such as a RAM, a non-volatile storage unit 36C, and a network I/F unit 36D. The programs stored in the storage unit 36C will be described later.

Next, an operation of this exemplary embodiment will be described. In this exemplary embodiment, an application program to be developed is configured to include a screen control program for realizing a user interface and a web service providing program for providing a web service. In general, this kind of application program is developed by the following processing.

That is, first, the developer defines requirements (for example, variables transmitted between the screen control program and the web service providing program) of the application program to be developed and sets variable definition information which describes names and/or types of an input variable and an output variable of the web service providing program according to the defined requirements. Then, the developer uses the web service creation tool to create a flowchart that defines processing realized by the web service providing program and then uses the web service creation tool to automatically generate the web service providing program on the basis of the created flowchart and the set variable definition information. Further, the developer uses a predetermined tool to automatically generate the managed bean into which a program is incorporated in which the storage area of the variables transmitted between the screen control program and the web service providing program and the variables are transmitted between the two programs, on the basis of the set variable definition information. The developer uses the UI construction tool to create a user interface screen or perform an operation to, for example, associate (bind) an information input field and/or an information display field in the user interface screen with the storage area of the corresponding variable incorporated into the managed bean, thereby constructing a user interface, and then, the developer uses the UI construction tool to automatically generate the screen control program. In this way, the application programs including the screen control program, the web service providing program, and the managed bean are developed.

To the contrary, in the development of the application programs, in a case in which an adaptive development method (agile software development) is be applied which starts the development of an application program without strictly defining the requirements of the application program and progresses the development of the application program while responding early to a change in the requirements if the requirements are changed, since, in particular, for the user interface realized by the screen control program, the requirements including the structure of the screen are determined while repeatedly performing a processing of discussing the user interface with the client while showing the current user interface, changing the user interface according to the request of the client, and showing the changed new user interface to the client again, the variables transmitted between the screen control program and the web service providing program are likely to be changed until the user interface realized by the screen control program is established. When the variables are changed, it is necessary to change the variable definition information and the managed bean in addition to the web service providing program, and therefore, a large workload are applied to the developer according to the number of times the variables are changed, and it takes a long time to show, for example, the changed new user interface to the client again.

Therefore, in this exemplary embodiment, when the adaptive development method is used to develop an application program, the development period of the application program is divided into a first period (first phase) until the requirements of an application program to be developed are established and the variables transmitted between the screen control program and the web service providing program are established and a second period (second phase) after the requirements of the application program to be developed and the variables are established. In the first phase, a program (prototype script) for performing a simple processing described by a script language (for example, JRuby) is used instead of the web service providing program and a managed bean (a managed bean for realizing the transmission of the variables between the screen control program and the prototype script) for prototype script is used as the managed bean, when the phase is changed from the first phase to the second phase, switching from the prototype script to the web service providing program and the switching of the managed bean are performed. The development of an application program according to this exemplary embodiment will be described below as follows.

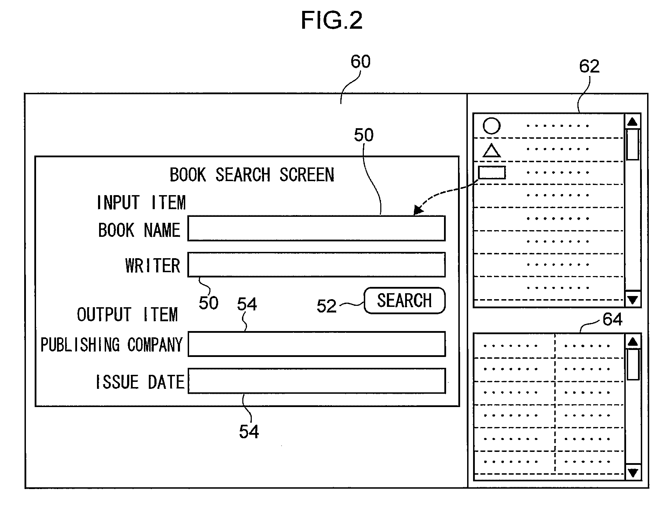

That is, in the first phase, the developer uses the UI construction tool to develop the screen control program on the client terminal 16. In the development of the screen control program, first, the developer starts the program of the UI construction tool in the client terminal 16. Then, for example, a creation screen shown in Fig. 2 is displayed at the display 18 of the client terminal 16. The UI construction tool causes the developer to perform an operation of constructing a UI, and, when the operation by the developer is completed, the UI construction tool generates a screen control program which is a tool which is provided with a function to realize the constructed UI, and an UI screen creation area 60 for the developer to create a UI screen (web page), a palette 62 in which various kinds of components such as fields and/or buttons for inputting/displaying information which may be used as components of the UI screen, are displayed, and a property setting area 64 for setting various kinds of attribute information (properties) with respect to the components arranged in the UI screen are provided in the creation screen shown in Fig. 2. If the developer performs a predetermined operation, a screen transition definition area for defining the transition between plural UI screens created in the UI screen creation area 60 is also displayed (not shown in Fig. 2).

When the creation screen is displayed at the display 18 of the client terminal 16, the developer performs an operation for defining a UI to be constructed and constructs the UI of a predetermined web site providing the web service (develops the screen control program). That is, the developer repeatedly performs an operation (first operation) of selecting a desired component from various kinds of components displayed in the palette 62 using the mouse 22 and/or the keyboard 20, arranging the selected component at a desired position in the UI screen creation area 60, and inputting text information to be displayed in the UI screen and/or setting attribute information, if necessary, thereby sequentially creating (designing) plural UI screens (web pages) forming a predetermined web site.

For example, a book search is performed using the values of input items such as a "book name" and a "writer" as search conditions, as a result of the book search, when a book search screen in which a "publishing company" and an "issue date" are displayed as output items is created (designed), the developer performs an operation of selecting a component for input information and/or a component for displaying information, and a component for instructing a search among various kinds of components displayed in the palette 62, arranging the selected components at desired positions in the UI screen creation area 60, and setting the attribute information of the arranged components. In this way, as shown in the UI screen creation area 60 of Fig. 2, a book search screen having information input fields 50, a search instruction button 52, and information display fields 54 arranged thereon is created (designed).

For each of the information input fields 50 arranged in the UI screen, information for associating (also referred to as "UI-binding") each information input field 50 with the storage area of the variable which is input through each information input field 50 within the storage areas of the variables incorporated into the managed bean is also set as attribute information in the property setting area 64, for each of the information display fields 54 arranged in the UI screen, information for associating (UI-binding) each information display field 54 with the storage area of the variable which is displayed in each information display field 54 within the storage areas of the variables incorporated into the managed bean is also set as attribute information in the property setting area 64.

In a case in which, for example, when the program that transmits the variables from and to the screen control program through the managed bean is a web service providing program based on the BPEL standard, it is necessary to provide storage areas for each input variable and each output variable of the web service providing program in the managed bean. To the contrary, in a case in which the program that transmits the variables from and to the screen control program through the managed bean is, for example, a prototype script described by a script language such as JRuby, the transmission of the variables to the prototype script may be realized by transmitting the information of a single area in which a given number of given variables are collectively stored in a KEY-VALUE format (in the format in which a name (KEY) and a value (VALUE) are registered for each variable) as is.

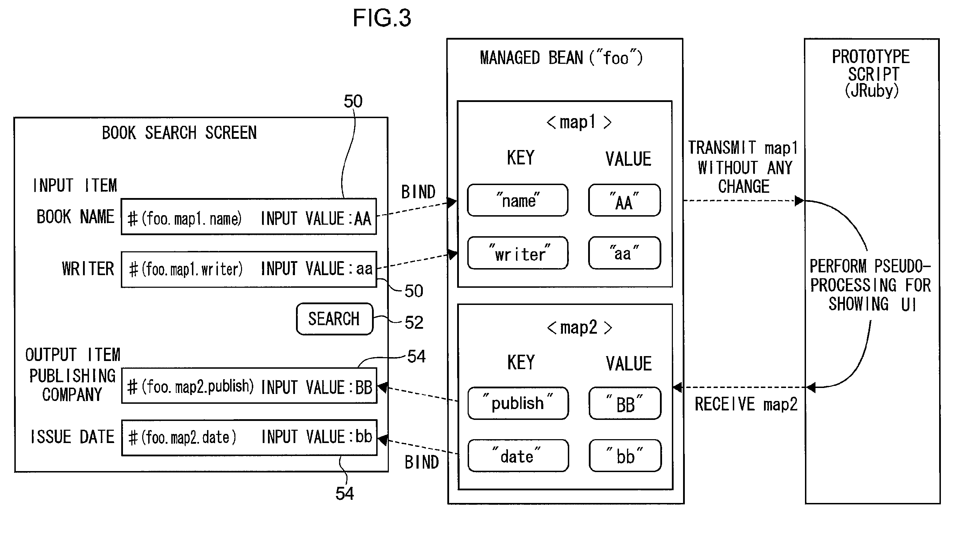

Therefore, in this exemplary embodiment, as the managed bean for a prototype script used in the first phase, for example, as shown in Fig. 3, a general-purpose managed bean (a managed bean "foo" shown in Fig. 3) is prepared in advance into which a collective storage area (a collective storage area map1 shown in Fig. 3) for collectively storing all variables received from the screen control program in the KEY-VALUE format and a collective storage area (a collective storage area map2 shown in Fig. 3) for collectively storing all variables to be transmitted to the screen control program in the KEY-VALUE format are incorporated and a variable delivery program for transmitting the variables between the UI screen and the prototype script is also incorporated. Note that the collective storage area corresponds to a first storage area according to the invention and the managed bean for the prototype script corresponds to a first file described in claim 3.

Therefore, in this exemplary embodiment, for the information input fields 50, an operation is performed in which the collective storage area (for example, the collective storage area map1 shown in Fig. 3) of the variables received from the screen control program, instead of a storage area (individual storage area) of variable unit in conventional art, is associated with each of the information input fields 50 arranged in the UI screen, and the name of the variable input through each information input field 50 is designated. For example, in Fig. 3, an example of the attribute information set in each information input field 50 in the book search screen which is an example of the UI screen is shown in each information input field 50. For example, in the attribute information "#(foo.map1.name)" shown in the information input field 50 of the "book name", "#(foo.map1....)" indicates that the information input field 50 is associated with the collective storage area map1 of the managed bean "foo" and "#(....name)" indicates that the name of the variable input through the information input field 50 is "name".

In this exemplary embodiment, for each of the information display fields 54 arranged in the UI screen, an operation is performed in which the collective storage area (for example, the collective storage area map2 shown in Fig. 3) of the variables received from the screen control program, instead of the individual storage area of each variable in conventional art, is associated with the information display fields 54, and the name of the variable displayed in each information display field 54 is designated. For example, in Fig. 3, an example of the attribute information set in each information display field 54 in the book search screen, which is an example of the UI screen, is written in each information display field 54. For example, in the attribute information "#(foo.map2.publish)" written in the information display field 54 of the "publishing company", "#(foo.map2....)" indicates that the information display field 54 is associated with the collective storage area map2 of the managed bean "foo" and "#(....publish)" indicates that the name of the variable displayed in the information display field 54 is "publish".

When all UI screens (web pages) forming the web site are created, the developer performs an operation of displaying the screen transition definition area at the display 18 of the client terminal 16 and defining the transition of each of the created UI screens at the displayed screen transition definition area. When the operation of defining the UI is completed in this way, the developer instructs the UI construction tool to generate a program for realizing the UI. Then, the UI construction tool generates a screen control program which realizes the UI constructed by the developer (for sequentially displaying the UI screens at the display 44 of the client terminal 42 in response to the request from the client terminal 42 (see Fig. 8)). The screen control program includes data which defines each of the UI screens and a program which defines a processing in a case in which the user performs various kinds of operations through each of the UI screens.

The developer also develops the prototype script in the first phase. The prototype script is a program which performs a pseudo-processing of transiting the display of the UI screen and/or transiting the UI screen in a state a web service providing program is not installed when the current UI realized by the screen control program is shown to the client, in a similar way in which a web service providing program is installed. For example, in the example shown in Fig. 3, the prototype script performs an operation in which the information of the collective storage area map1 is received from the managed bean "foo" and information in which an appropriate value is set in the KEY-VALUE format is transmitted as the information of the collective storage area map2 to the managed bean "foo". The prototype script is developed by describing and creating the program which realizes such as the pseudo-processing with a script language such as JRuby, and sequentially inputting the created program through, for example, a text editor which starts up on the client terminal 16. The processing to be realized by the prototype script is very simple and the prototype script is developed in a short time without any load to the developer.

In this exemplary embodiment, at least some of plural client terminals 16 of the first computer system 10 are portable PCs such as notebook PCs, and when all of the screen control program, the prototype script, and the managed bean for the prototype script are prepared, the developer stores them in the storage unit 16C of the client terminal 16, which is a portable PC, (the first and second platform programs shown in Fig. 1 are also stored), and when the developer meets the client and discusses the requirements with the client while showing the current user interface, the developer disconnects the client terminal 16 from the intranet 14. Then, the developer starts the screen control program with the client looking at the display 18 of the client terminal 16, and inputs information to the information input field in the UI screen displayed at the display 18 and/or selects a button and etc.. Note that, in some cases, these operations may be performed by the client.

For example, when an operation is performed in which information is input in the information input field 50 in the UI screen and a button for instructing executing a processing of providing a predetermined web service is selected, as shown in Fig. 3, the screen control program causes the client terminal 16 to perform a processing of storing input information (the variable name and value of the input information) in the KEY-VALUE format in the collective storage area (the collective storage area of the variables received from the screen control program) whose name is designated by the attribute information, in the managed bean (the managed bean for the prototype script) whose name is designated by the attribute information according to the attribute information set in the information input field 50 in which the information is input, and calling the variable delivery program of the managed bean. For example, in the example shown in Fig. 3, "AA" is input as the value of the variable with the name "name" in the information input field 50 of the "book name", "aa" is input as the value of the variable with the name "writer" in the information input field 50 of the "writer", and the variables are stored in the collective storage area map1 of the managed bean "foo" in the KEY-VALUE format. Note that, in this case, the variables stored in the collective storage area correspond to a first input variable according to the invention.

When the variable delivery program of the managed bean is called from the screen control program, the variable delivery program causes the client terminal 16 to perform a processing of calling the prototype script and transmitting, to the prototype script, all information items stored in the collective storage area (in the example in Fig. 3, the collective storage area map1) of the variables received from the screen control program within the collective storage areas incorporated into the managed bean.

When the prototype script is called from the variable delivery program and all information items stored in the collective storage area are transmitted, first, the client terminal 16 executes the second platform program, serving as a platform for executing the prototype script, to perform a processing of determining the type of each variable which is set in the information received from the variable delivery program in the KEY-VALUE format. Then, the client terminal 16 executes the prototype script to perform the pseudo-processing (a processing corresponding to a first processing according to the invention) according to the determined type of each variable. The pseudo-processing includes a processing of generating information (information in which the name and value of a predetermined variable are set in the KEY-VALUE format) to be stored in the collective storage area (in the example shown in Fig. 3, the collective storage area map1) of the variables to be transmitted to the screen control program within the collective storage areas incorporated into the managed bean, calling the variable delivery program of the managed bean, and transmitting the generated information to the variable delivery program.

When the variable delivery program of the managed bean is called from the prototype script and the information is transmitted, the variable delivery program causes the client terminal 16 to perform a processing of storing the transmitted information in the collective storage area (in the example shown in Fig. 3, the collective storage area map2) of the variables to be transmitted to the screen control program within the collective storage areas incorporated into the managed bean and calling the screen control program. For example, in the example shown in Fig. 3, the name "publish" and the value "BB" of the variable, and the name "date" and the value "bb" of the variable are stored in the collective storage area map2 of the managed bean "foo" in the KEY-VALUE format. Note that, at this time, the variables stored in the collective storage area correspond to a first output variable according to the invention.

When the screen control program is called from the variable delivery program of the managed bean, the screen control program causes the client terminal 16 to perform a processing of reading the value of the variable whose name is designated by the attribute information from the collective storage area (the collective storage area of the variables to be transmitted to the screen control program) designated by the attribute information in the managed bean for the prototype script which is designated by the attribute information according to the attribute information which is set in the information display field 54 in the UI screen, and displaying the read value of the variable in the corresponding information display field 54. For example, in the example shown in Fig. 3, "BB" is displayed as the value of the variable with the name "publish" in the information display field 54 of the "publishing company" and "bb" is displayed as the value of the variable with the name "date" in the information display field 54 of the "issue date".

Note that the processing realized by the variable delivery program which is incorporated into the managed bean for the prototype script corresponds to a first control unit (specifically, a first control unit described in claim 2), and the variable delivery program incorporated into the managed bean for the prototype script forms a portion of the application development supporting program according to the invention.

Each time the developer (or the client) performs an operation accompanied with a change of the display of the UI screen and/or the transition of the UI screen in the UI screen displayed at the display 18 of the client terminal 16, the screen control program, the variable delivery program of the managed bean, and the prototype script co-operate and perform the above-mentioned processing, the change of the display of the pseudo-UI screen and/or the transition of the UI screen occur, and thus, the client who observes the display 18 of the client terminal 16 may check the current user interface realized by the current screen control program, and discuss propriety and etc. with the developer or request the developer an improvement and etc. in the current user interface.

As a result of the discussion with the client or the request of improvement from the client, if the current user interface realized by the current screen control program needs to be changed, the developer uses the UI construction tool to correct the screen control program such that the user interface realized by the screen control program is changed to the client's desired new user interface. Note that, the content and/or the number of variables transmitted between the screen control program and the prototype script varies depending on the change in the user interface, and therefore, the prototype script also needs to be changed, however, in this case, it is not necessary to change the processing realized by the variable delivery program and the collective storage area of the managed bean. Thus, the developer may correct the screen control program (and the prototype script) on the spot although it depends on the degree of the change in the user interface, and, a new user interface may be showed to the client on the spot.

When the requirements of the application program to be developed are established by the above-mentioned processing and the variables transmitted between the screen control program and the prototype script (originally, the web service providing program) are also established, the developer sets and generates variable definition information which describes names and/or types of the input and output variables of the web service providing program to be developed successively, on the basis of the established variables. The variable definition information is called, for example, WSDL (Web Service Description Language) in the BPEL standard. Further, in this exemplary embodiment, there is a development rule that "uses the same name as that of the corresponding variable set as the attribute information in the information input field and/or the information display field of the UI screen" for the input variable and the output variable of the web service providing program, and therefore, the developer determines the names of each input variable and each output variable of the web service providing program according to the development rule and sets the determined names in the variable definition information.

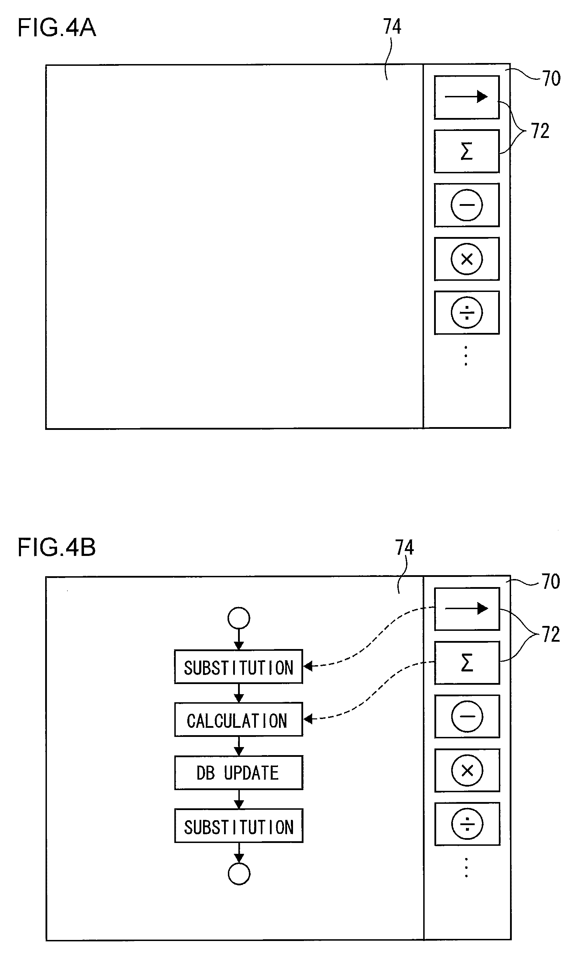

When the setting and generation of the variable definition information are completed, the developer uses the web service creation tool to develop a web service providing program. That is, when the developer starts up the program of the web service creation tool in the client terminal 16, for example, a creation screen shown in Fig. 4A is displayed at the display 18 of the client terminal 16. When the developer creates a flowchart which defines the processing realized by the web service to be provided, the web service creation tool is a tool which has a function to cause the computer to perform a processing of generating a web service providing program for executing the processing indicated by the created flowchart, and a work area in which the developer creates a flowchart and a palette 70 in which plural kinds of parts (symbols) 72 indicating different processing that may be used to create the flowchart are displayed are provided in the creation screen shown in Fig. 4A.

When the creation screen is displayed, the developer repeatedly performs an operation of, via the mouse 22 and/or the keyboard 20, selecting a desired part 72 from the plural parts 72 displayed in the palette 70, arranging the selected part in a work area 74, and inputting information which defines the content of the processing indicated by the arranged part 72, and defining the connection relationship (the order in which the processing indicated by the parts 72 are executed) between the arranged part 72 and the parts 72 arranged in the work area 74 if necessary, to create a flowchart which defines a processing of realizing a web service to be provided, as shown in Fig. 4B as an example. When the creation of the flowchart is completed, the developer performs an operation of instructing of generation of a program corresponding to the created flowchart.

Programs for realizing the processing represented by each part are added to the parts displayed in the palette, and when the generation of the programs is instructed, the web service creation tool causes the computer to perform a processing of correcting the programs added to each of the parts forming the created flowchart on the basis of, for example, the information for defining the content of the processing input by the developer and types of input and output variables described in the variable definition information and arranging the programs according to the connection relationship between the parts in the created flowchart, thereby generating a program (web service providing program) for performing the processing indicated by the created flowchart. In this way, a web service providing program for providing a desired web service is developed.

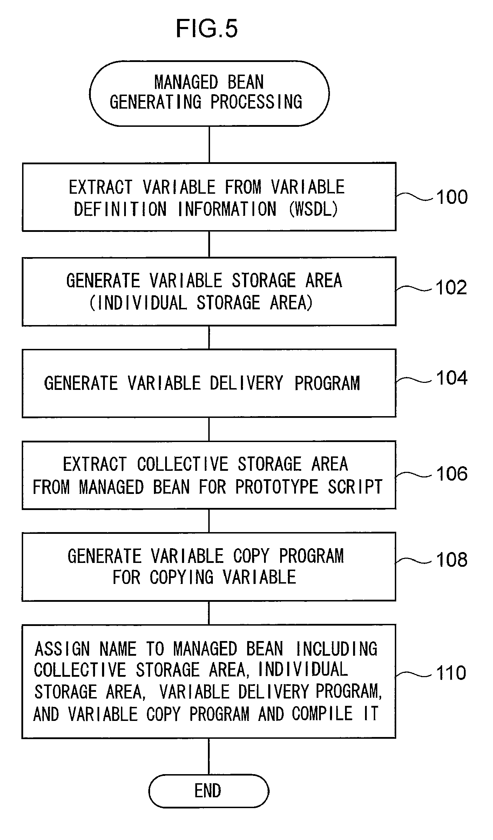

Then, the developer starts a managed bean generating program at the client terminal 16 in order to obtain a managed bean (a new managed bean for transmitting the variables between the screen control program and the web service providing program) for the web service providing program. In this way, the managed bean generating processing shown in Fig. 5 is performed by the client terminal 16.

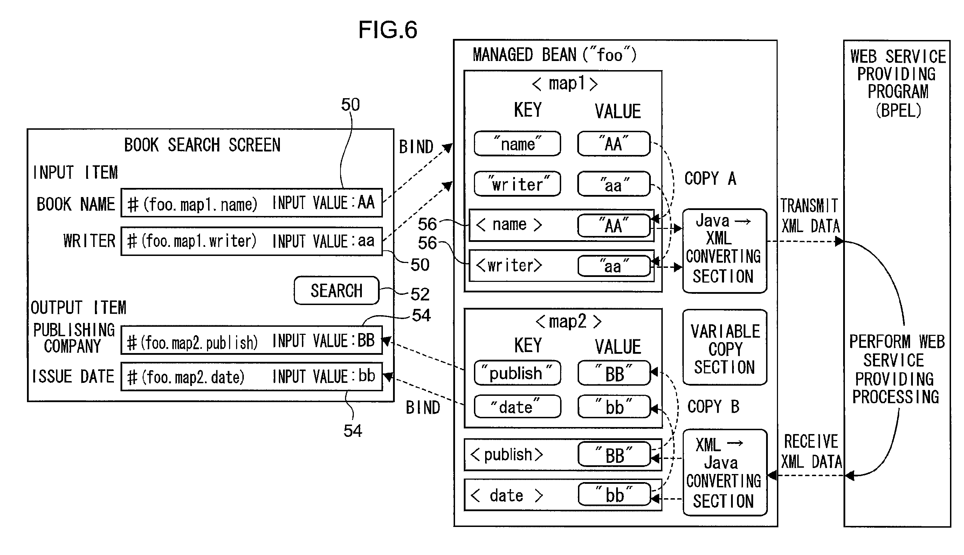

In the managed bean generating processing, first, in Step 100, all of the input and output variables described in the variable definition information are extracted with reference to the variable definition information (for example, WSDL in the BPEL standard) in which the input and output variables of the web service providing program are described. Then, in Step 102, as one of the components incorporated into a newly generated managed bean, a variable storage area (individual storage area) is generated for each of the variables extracted in Step 100. For example, when the input variables of the web service providing program are a variable "name" and a variable "writer" and the output variables are a variable "publish" and a variable "date", four individual storage areas 56 for storing the variables are generated as shown in Fig. 6. Note that the individual storage area generated by the above-mentioned processing corresponds to a second storage area according to the invention.
Then, in Step 104, as one of the components incorporated into the newly generated managed bean, a variable delivery program for causing the computer to perform a processing of transmitting the variables between the web service providing program and the individual storage areas generated in Step 102 is generated. For example, when the input variables of the web service providing program are the variable "name" and the variable "writer", a program for causing the computer to perform a processing of calling the web service providing program as the variable delivery program, reading the value (data) stored in the individual storage area of the variable "name" and the value (data) stored in the individual storage area of the variable "writer", and transmitting the read data to the called web service providing program is generated by the processing of Step 104. Note that in a case in which the managed bean is operated on a Java platform and the web service providing program is a program (BPEL platform) based on the BPEL standard, the program needs to be configured such that it causes the computer to perform a processing of converting Java data read from the individual storage area into XML data., and, in Fig. 6, the program is expressed as a "Java→XML converting section".

For example, in a case in which the output variables of the web service providing program are the variable "publish" and the variable "date", as the variable delivery program by the processing of Step 104, a program that is called from the web service providing program and that causes a computer to perform a processing of storing the value (data) of the transmitted variable "publish" in the individual storage area of the variable "publish" and storing the value (data) of the transmitted variable "date" in the individual storage area of the variable "date" when the value (data) of the variable "publish" and the value (data) of the "date" are received from the variable web service providing program is generated. Note that in a case in which the managed bean is operated on the Java platform and the web service providing program is a program (BPEL platform) based on the BPEL standard, the program needs to be configured such that it causes the computer to perform a processing of converting XML data received from the web service providing program into Java data, and, in Fig. 6, the program is expressed as an "XML → Java converting section".

In Step 106, as one of the components incorporated into the newly generated managed bean, the collective storage area (the collective storage area of the variables received from the screen control program and the collective storage area of the variables to be transmitted to the screen control program) incorporated into the managed bean for the prototype script is extracted from the managed bean. In Step 108, as one of the components incorporated into the newly generated managed bean, a variable copy program which copies the variables between the collective storage area extracted in Step 106 and the individual storage area generated in Step 102 is generated.

For example, in a case in which the input variables of the web service providing program are the variable "name" and the variable "writer" and the output variables thereof are the variable "publish" and the variable "date", as the variable copy program by the processing of Step 108, a program is generated which causes a computer to perform a processing of copying a new value of the stored variable "name" to the individual storage area of the variable "name" and copying a new value of the stored variable "writer" to the individual storage area of the variable "writer" when the new values are stored as the variable "name" and the variable "writer" in the collective storage area of the variables received from the screen control program, and copying a new value of the stored variable "publish" and a new value of the stored variable "date" to the collective storage area of the variables to be transmitted to the screen control program in the KEY-VALUE format when the new values are stored in the individual storage area of the variable "publish" and the individual storage area of the variable "date". Note that, in Fig. 6, the program is expressed as a "variable copy section".

In Step 110, the same name as that of the managed bean for the prototype script is assigned to a new managed bean in which the collective storage area extracted in Step 106, the individual storage area generated in Step 102, the variable delivery program generated in Step 104, and the variable copy program generated in Step 108 are incorporated, and the new managed bean is compiled, and then, the managed bean generating processing is completed. Step 110 corresponds to a generating unit described in claim 3.

In this way, a new managed bean for realizing the transmission of the variables between the screen control program and the web service providing program is generated. Note that the managed bean generating processing realized by the managed bean generating program corresponds to a generating unit according to the invention, and the managed bean generating program forms a portion of the application development supporting program according to the invention. Further, the managed bean for the web service providing program generated by the managed bean generating processing corresponds to a second file described in claim 3.

As described above, when the generation of the variable definition information, the development of the web service providing program, and the generation of the new managed bean are completed, the developer uploads the web service providing program and the corresponding variable definition information from the client terminal 16 to the server computer 12 and registers the uploaded web service providing program and the variable definition information in the web service library such that the web service providing program is capable of being executed by the server computer 12. Note that the web service providing program and the variable definition information are registered in the web service library, whereby they may also be used by other developers. Then, the developer replaces the managed bean (the managed bean for the prototype script) stored in the storage unit 16C of the client terminal 16 with the newly generated managed bean, thereby transiting from the first phase to the second phase.

Note that, since the prototype script is not used in the second phase, when transiting from the first phase to the second phase, the prototype script stored in the storage unit 16C of the client terminal 16 may be erased, however, since the prototype script is not called from the managed bean by replacing the managed bean, the prototype script may be stored as is. In the second phase, with accompanying by replacement of the managed bean, the program for transmitting the variables from and to the screen control program through the managed bean is switched from the prototype script to the web service providing program and the server computer 12 executes the web service providing program. In this way, a processing of providing the designated web service to the user is performed instead of the pseudo-processing by the prototype script.

That is, in a case in which an operation of inputting information to the information input field in the UI screen which is displayed at the display 18 and selecting a button for performing a processing of providing a predetermined web service is performed after the screen control program starts at the client terminal 16, as shown in Fig. 6, the screen control program causes the client terminal 16 to perform a processing of storing input information (the variable name and value of the input information) in the KEY-VALUE format in the collective storage area (the collective storage area of the variables received from the screen control program) whose name is designated by the attribute information according to the attribute information which is set in the information input field 50 to which information is input, among the managed bean whose name is designated by the attribute information.

Here, since the new managed bean (the managed bean for the web service providing program) after the replacement has the same name as the managed bean (the managed bean for the prototype script) before the replacement and has the collective storage area, which has the same name as the managed bean before the replacement, incorporated thereinto, it is not necessary to change the attribute information set in the information input field 50 and the variable name and value of the information input in the information input field 50 are stored in the collective storage area of the new managed bean after replacement in the KEY-VALUE format, similar as before the managed bean is replaced, and the variable delivery program of the managed bean is called.

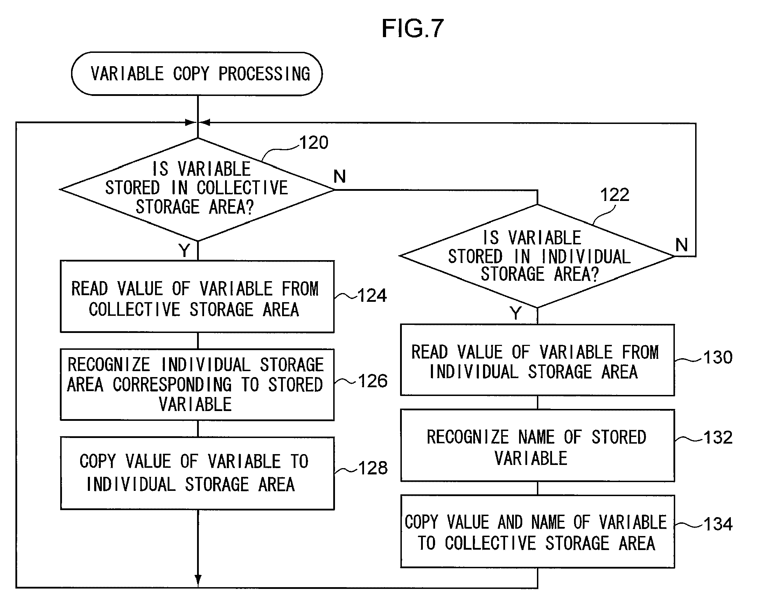

Here, the variable copy program incorporated into the new managed bean causes the client terminal 16 to perform a variable copy processing shown in Fig. 7. That is, in the variable copy processing, in Step 120, it is determined whether the value of a new variable is stored in the collective storage area incorporated into the managed bean. If the determination result is No, the processing proceeds to Step 122 and it is determined whether the value of the new variable is stored in any individual storage area incorporated into the managed bean. If the determination result is No, the processing returns to Step 120 and steps 120 and 122 are repeated until the determination result of either Step 120 or Step 122 is Yes.

As described above, when the variable name and value of the information input in the information input field 50 are stored in the collective storage area of the managed bean in the KEY-VALUE format by the screen control program, the determination result of Step 120 is Yes and the processing proceeds to Step 124 to read the name and value of the variable that is newly stored in the collective storage area from the collective storage area. In Step 126, an individual storage area (an individual storage area for storing variables with the same name) corresponding to the variable whose value is newly stored in the collective storage area is recognized on the basis of the name of the variable read in Step 124. Then, in Step 128, the value of the variable read in Step 124 is copied to the individual storage area recognized in Step 126 (corresponding to "copy A" shown in Fig. 6), and the processing returns to Step 120. Note that the variable whose value is copied from the collective storage area to the individual storage area corresponds to a second input variable according to the invention.

After the value of the variable is copied from the collective storage area to the individual storage area by the variable copy program, the variable delivery program called by the screen control program causes the client terminal 16 to perform a processing of calling the web service providing program that is operated on the server computer 12 and performs a processing of providing a web service corresponding to the selected button and transmitting as a argument the value of the variable stored in the individual storage area (that is, the individual storage area in which the value of the variable is copied by the variable copy program) of the input variable of the web service providing program defined by the variable definition information within the individual storage areas incorporated into the managed bean to the called web service providing program. In this way, the value of the variable input in the information input field in the UI screen is transmitted from the screen control program to the web service providing program, and the web service providing program is executed by the server computer 12, whereby a processing of providing a web service corresponding to the value of the transmitted variable (input variable) is performed by the server computer 12.

Further, when the processing based on the web service providing program is completed, the web service providing program calls the variable delivery program of the managed bean, and the value of the output variable of the web service providing program defined by the variable definition information is transmitted as an argument from the web service providing program to the variable delivery program. The called variable delivery program causes the client terminal 16 to perform a processing of storing the value of the received variable in the individual storage area of the output variable of the web service providing program defined by the variable definition information within the individual storage areas incorporated into the managed bean. Note that the variable whose value is stored in the individual storage area by the above-mentioned processing corresponds to a first output variable described in claim 2.

When the value of the variable is newly stored in the individual storage area, the determination result of Step 122 in the variable copy processing (Fig. 7) is Yes and the processing proceeds to Step 130 to read the value of the variable from the individual storage area in which the value of the variable is newly stored. In Step 132, the name of the variable whose value is read from the individual storage area in Step 130 is recognized. In Step 134, the value of the variable read from the individual storage area in Step 130 and the name of the variable recognized in Step 132 are copied in the KEY-VALUE format in the collective storage area of the variables to be transmitted to the screen control program, and after the screen control program is called, the processing returns to Step 120. Note that in the above-mentioned processing, the variable whose value is copied from the collective storage area to the individual storage area corresponds to a second output variable described in claim 2.

The screen control program called from the variable copy program of the managed bean causes the client terminal 16 to perform a processing of reading the value of the variable whose name is designated by the attribute information from the collective storage area (the collective storage area of the variables to be transmitted to the screen control program) whose name is designated by the attribute information in the managed bean whose name is designated by the attribute information according to the attribute information which is set in the information display field 54 of the UI screen, and displaying the read value of the variable in the corresponding information display field 54. In this case, since a new managed bean (the managed bean for the web service providing program) after replacement has the same name as the managed bean (the managed bean for the prototype script) before replacement and has the collective storage area, which has the same name as the managed bean before replacement, incorporated thereinto, it is not necessary to change the attribute information set in the information display field 54, and the value of the variable stored in the collective storage area of the variables to be transmitted to the screen control program is read by the screen control program and is then displayed in the information display field 54, similar as before the managed bean is replaced.

Thus, in this exemplary embodiment, since the program for transmitting the variables from and to the screen control program may be switched from the prototype script to the web service providing program only by registering the web service providing program in the library such that the computer may execute the web service providing program and by replacing the managed bean for the prototype script with the managed bean for the web service providing program, and it is not necessary to change, for example, the screen control program, after the generation of the variable definition information, the development of the web service providing program, and the generation of the new managed bean are completed, the program for transmitting the variables from or to the screen control program may be immediately switched from the prototype script to the web service providing program and thus debugging of the web service providing program in the second phase and/or all of the application programs may be started. Therefore, the workload of the developer and the development time of an application program may be reduced.

Note that the processing realized by the variable delivery program and the variable copy program incorporated into the managed bean for the web application providing program corresponds to a second control unit (specifically, a second control unit described in claim 2) according to the invention, the variable delivery program and the variable copy program incorporated into the managed bean for the web application providing program as well as the managed bean generating program and the variable delivery program incorporated into the managed bean for the prototype script form the application development supporting program according to the invention. The client terminal 16 which executes these programs functions as an application development supporting apparatus according to the invention.

Further, when the development of the application program is completed and the application program (a web site realized by the application program) is operated by the second computer system 30 shown in Fig. 8, the screen control program and the managed bean (the managed bean for realizing the transmission of the variables between the screen control program and the web service providing program) among the developed application programs are stored (installed) in the storage unit 34C of the application server 34, and the web service providing program is stored (installed) in the storage unit 36C of the web service providing server 36.

Further, the first platform program serving as a platform for executing the screen control program and the second platform program serving as a platform for executing the program incorporated into the managed bean are stored (installed) in the storage unit 34C of the application server 34. For example, in a case in which the UI construction tool is based on the JSF standard, a program which provides a platform which is called a JSF engine is used as the first platform program, and the screen control program is executed on the platform (JSF engine). Further, in a case in which the program incorporated into the managed bean is a Java program, a program which provides a Java platform is used as the second platform program and the program incorporated into the managed bean is executed on the Java platform.

A third platform program serving as a platform for executing the web service providing program is also stored (installed) in the storage unit 36C of the web service providing server 36. For example, in a case in which the web service creation program is based on the BPEL standard, a program which provides a platform which is called a BPEL engine is used as the third platform program and the web service providing program is executed on the platform (BPEL engine).

Each time the user uses the client terminal 42 to request the delivery of the UI screen, the screen control program executed on the application server 34 (specifically, on the platform provided by the platform program) causes the application server 34 to perform a processing of transmitting the data of the UI screen which is requested to be delivered to the client terminal 42, which is a request source, and displaying the UI screen requested to be delivered at the display 44 of the client terminal 42 which is a request source. Further, after the user uses, for example, the keyboard 46 to input information to the information input field of the UI screen displayed at the display 44 and the information is temporarily stored in, for example, the memory 42B of the client terminal 42, the input information is then transmitted to the application server 34 at a predetermined timing (for example, a timing when a button for instructing of providing a web service is selected).

The information transmitted to the application server 34 is transmitted from the screen control program to the web service providing program executed on the web service providing server 36 through the managed bean (through the processing shown in Fig. 6), and the web service providing program causes the web service providing server 36 to perform a processing of providing the web service instructed by the user. Note that in a case in which the processing for providing the web service includes an access to a DB, an access to the DB is realized by instructing to perform the access to the DB from the web service providing server 36 to the DB server 38 through the application server 34.

When the processing for providing the web service is completed, the web service providing program causes the web service providing server 36 to perform a processing of transmitting information (the output variable of the web service providing program) to the application server 34, and the information is transmitted to the screen control program through the managed bean (through the processing shown in Fig. 6), and the screen control program causes the application server 34 to perform a processing of transmitting the data of the UI screen in which the information transmitted from the web service providing server 36 is displayed in the information display field to the client terminal 42. In this way, the display of the UI screen at the display 44 of the client terminal 42 is switched. Each time the user inputs an instruction to provide the web service, the series of processing are repeatedly performed, whereby the user's desired web service is provided to the user who accesses the web site realized by the application program.

Note that, in the above-described embodiment, in the variable copy processing realized by the variable copy program, it is monitored whether the new value of the variable is stored in the collective storage area and the individual storage area, and, when the new value is stored in one of the collective storage area and the individual storage area, the stored new value is copied to the other storage area of the collective storage area and the individual storage area, however, the invention is not limited thereto, in the variable delivery processing realized by the variable delivery program called by the screen control program or the web service providing program, in a case in which the caller is the screen control program, first, the variable copy program may be called and the variable may be copied from the collective storage area to the individual storage area, and then, the web service providing program may be called and the variable copied to the individual storage area may be transmitted to the called web service providing program, and in a case in which the caller is the web service providing program, first, the variable received from the web service providing program may be stored in the individual storage area, and then, the variable copy program may be called and the variable may be copied from the individual storage area to the collective storage area. Further, in this structure, the program may not be divided into the variable delivery program and the variable copy program, but the processing realized by the two programs may be realized by a single program.

Further, in the above-described embodiment, JRuby is raise as an example of the script language describing the prototype script, however, the script language is not limited to JRuby or other script languages, for example, the programming language describing the prototype script (a first program according to the invention) may be a programming language (a program language in which a type of variable is determined when the program is executed) that does not need to predefine the variable. However, in the development of the application program by the adaptive development method, for example, a language that does not need to perform compiling (conversion to a machine language), such as a script language, is more preferable in considering a purpose such as changing the UI on the spot and showing the changed UI to the client again when the UI shown to the client needs to be changed.

Further, in the above-described embodiment, when the application program runs, the application server 34 executes (the program of) the managed bean and the screen control program among the application programs, and the web service providing server 36 executes the web service providing program, however, the invention is not limited thereto, the same computer may execute each program of the application programs, or different computers may execute the screen control program, (the program of) the managed bean, and the web service providing program.

Further, in the above-described embodiment, it is assumed that the web service providing program outputs the output variable, but the invention is not limited thereto, it may be also considered that the output variable may not exist according to the content of the web service provided by the web service providing program. In this case, the collective storage area (for example, the collective storage area map2 shown in Figs. 3 and 6) and the individual storage area (for example, the individual storage areas of the variables "publish" and "date" shown in Fig. 6) of the variables to be transmitted to the screen control program may be omitted, and the variable delivery program incorporated into the managed bean for the prototype script may be configured such that a processing of storing the output variable received from the prototype script in the collective storage area is omitted, and the variable delivery program incorporated into the managed bean for the web service providing program may be configured such that a processing of storing the output variable received from the web service providing program in the corresponding individual storage area is omitted, and the variable copy program incorporated into the managed bean for the web service providing program may be configured such that a processing of copying the variable from the individual storage area to the collective storage area is omitted. The scope of claim 1 also includes the above-mentioned structures.

Further, in the above-described embodiment, the variable delivery program for causing a computer to function as the first control unit according to the invention and the collective storage area are incorporated into the managed bean for the prototype script, and the variable delivery program and the variable copy program for causing a computer to function as the second control unit according to the invention, the collective storage area and the individual storage areas are incorporated into the managed bean for the web service providing program, however, the invention is not limited thereto, and the programs serving as the first control unit and/or the second control unit according to the invention and the variable storage area may be separately provided.

In the above-described embodiment, among the programs (the variable delivery program incorporated into the managed bean for the prototype script, the managed bean generating program, and the variable delivery program and the variable copy program incorporated into the managed bean for the web application providing program) corresponding to the application development supporting programs according to the invention, the managed bean generating program and the variable delivery program incorporated into the managed bean for the prototype script are stored (installed) in the storage unit 16C of the client terminal 16 in advance (note that each program incorporated into the managed bean for the web application providing program is generated by the managed bean generating program), however, the application development supporting program according to the invention may be provided in a form in which the program is stored at a recording medium, such as a CD-ROM or a DVD-ROM. In this case, the recording medium corresponds to a recording medium described in claim 12.

All publications, patent applications, and technical standards mentioned in the present specification are herein incorporated by reference to the same extent as the case in which each individual publication, patent application, and technical standard is specifically and individually described to be incorporated by reference.

## Claims

1. An application development supporting apparatus comprising:
a first control unit that transmits a first input variable whose value is stored in a first storage area to a first program, in which a type of a variable transmitted between an exterior and the first program is determined in a first processing realized by execution of the first program by a computer, and causes the computer to perform the first processing, during a first period for which only the first storage area, in which at least the value of the first input variable input in an information input field of a user interface screen is stored so as to be associated with a name of the first input variable, is provided as a variable storage area when a program is executed;
a generating unit that generates a second storage area provided with a storage area for at least each second input variable which is transmitted from the exterior to a second program among variables defined in variable definition information on the basis of the variable definition information which is set with respect to the second program in which a type of a variable transmitted between the exterior and the second program needs to be defined in advance by the variable definition information and by which a second processing is performed by execution by a computer; and
a second control unit that, during a second period after the second storage area is generated by the generating unit, copies the value of the first input variable stored in the first storage area to the storage area of the second input variable corresponding to the first input variable within the second storage area, transmits the second input variable whose value is copied to the storage area to the second program, and causes a computer to perform the second processing according to the transmitted second input variable.

2. The application development supporting apparatus of claim 1, wherein
the first control unit, during the first period, transmits the first input variable whose value is stored in the first storage area to the first program and causes the computer to perform the first processing, and stores a value of a first output variable transmitted from the first program in the first storage area so as to be associated with a name of the first output variable after the first processing is completed,
the value of the first output variable stored in the first storage area is displayed in an information display field of the user interface screen,
the generating unit generates the second storage area provided with the storage area for each second input variable transmitted from the exterior to the second program and each second output variable transmitted from the second program to the exterior, on the basis of the variable definition information, and
the second control unit, during the second period, copies the value of the first input variable stored in the first storage area to the storage area of the second input variable corresponding to the first input variable within the second storage area, transmits the second input variable whose value is copied to the storage area to the second program, and causes the computer to perform the second processing according to the transmitted second input variable, and after the second processing is completed, the second control unit stores the value of the second output variable transmitted from the second program in the storage area corresponding to the transmitted second output variable in the second storage area, and stores the value of the second output variable as the value of the first output variable in the first storage area so as to be associated with the name of the first output variable corresponding to the second output variable.

3. The application development supporting apparatus of claim 1 or 2, wherein
a name is assigned to a first file which includes the first storage area in advance,
during designing of the user interface screen, the name of the first input variable which is input in the information input field of the user interface screen and the name of the first file are set in the information input field,
during execution of the program, at least a processing of storing the value of the first input variable input in the information input field of the user interface screen in the first storage area so as to be associated with the name of the first input variable is performed by a computer, which executes a third program for realizing a user interface which includes the user interface screen, on the basis of the name of the first input variable and the name of the first file which are set in the information input field,
after generating the second storage area, the generating unit assigns the same name as that of the first file to a second file which includes the first storage area and the generated second storage area, and
the second file to which the same name as the first file is assigned replaces the first file.

4. The application development supporting apparatus of claim 3, wherein,
during designing of the user interface screen, the name of the first output variable which is displayed in the information display field of the user interface screen and the name of the first file are set in the information display field, and
a processing of displaying the value of the first output variable stored in the first storage area in the information display field of the user interface screen is also performed, by the computer executing the third program, on the basis of the name of the first output variable and the name of the first file which are set in the information display field.

5. The application development supporting apparatus of claim 3 or 4, wherein,
the third program is generated using a first tool which causes a computer to generate the third program, for realizing the user interface, which displays plural kinds of symbols, which include information input/display fields capable of being used as components of the user interface screen and capable of at least one of inputting and displaying of information, at a display screen and which generates the user interface when a developer performs at least a first operation of disposing a desired symbol among the plural kinds of symbols at a desired position at a screen to design the user interface screen, thereby defining the user interface to be constructed.

6. The application development supporting apparatus of any one of claims 1 to 5, wherein the first tool is based on a JSF standard.

7. The application development supporting apparatus of any one of claims 1 to 6, wherein the first program is described by a script language.

8. The application development supporting apparatus of any one of claims 1 to 7, wherein
the first program is executed at a computer that executes a platform program serving as a platform for executing the first program, and
a processing of determining the type of the variable transmitted between the exterior and the first program in the first processing realized by the execution of the first program by the computer is performed by the execution of the platform program by the computer.

9. The application development supporting apparatus of any one of claims 1 to 8, wherein, when a developer creates a flowchart defining a desired processing, the second program for performing the processing indicated by the created flowchart is generated by a computer using a second tool.

10. The application development supporting apparatus of claim 9, wherein the second tool is based on a BPEL standard.

11. An application development supporting program that causes a computer to function as
a first control unit that transmits a first input variable whose value is stored in a first storage area to a first program, in which a type of a variable transmitted between an exterior and the first program is determined in a first processing realized by execution of the first program by a computer, and causes the computer to perform the first processing, during a first period for which only the first storage area, in which at least the value of the first input variable input in an information input field of a user interface screen is stored so as to be associated with a name of the first input variable, is provided as a variable storage area when a program is executed;
a generating unit that generates a second storage area provided with a storage area for at least each second input variable which is transmitted from an exterior to a second program among variables defined in variable definition information on the basis of the variable definition information which is set with respect to the second program in which a type of a variable transmitted between the exterior and the second program needs to be defined in advance by the variable definition information and by which a second processing is performed by execution by a computer; and
a second control unit that, during a second period after the second storage area is generated by the generating unit, copies the value of the first input variable stored in the first storage area to the storage area of the second input variable corresponding to the first input variable within the second storage area, transmits the second input variable whose value is copied to the storage area to the second program, and causes a computer to perform the second processing according to the transmitted second input variable.

12. A recording medium storing an application development supporting program that causes a computer to function as
a first control unit that transmits a first input variable whose value is stored in a first storage area to a first program, in which a type of a variable transmitted between an exterior and the first program is determined in a first processing realized by execution of the first program by a computer, and causes the computer to perform the first processing, during a first period for which only the first storage area, in which at least the value of the first input variable input in an information input field of a user interface screen is stored so as to be associated with a name of the first input variable, is provided as a variable storage area when a program is executed;
a generating unit that generates a second storage area provided with a storage area for at least each second input variable which is transmitted from the exterior to a second program among variables defined in variable definition information on the basis of the variable definition information which is set with respect to the second program in which a type of a variable transmitted between the exterior and the second program needs to be defined in advance by the variable definition information and by which a second processing is performed by execution by a computer; and
a second control unit that, during a second period after the second storage area is generated by the generating unit, copies the value of the first input variable stored in the first storage area to the storage area of the second input variable corresponding to the first input variable within the second storage area, transmits the second input variable whose value is copied to the storage area to the second program, and causes a computer to perform the second processing according to the transmitted second input variable.
